# EUROPEAN PATENT SPECIFICATION

(11) **EP 2 924 782 B1**
(45) Date of publication and mention of the grant of the patent: **07.11.2018**
(21) Application number: 15157581.8
(22) Date of filing: 04.03.2015
(51) Int. Cl.: H01M 4/1391, H01M 4/36, H01M 4/505, H01M 4/525, H01M 4/62, H01M 10/0525

(54) **Nonaqueous electrolyte battery and method for manufacturing the same**
Batterie mit nichtwässrigem Elektrolyten und Verfahren zu ihrer Herstellung
Batterie à électrolytes non aqueux et son procédé de fabrication

(30) Priority: 27.03.2014 JP 2014064923
(43) Date of publication of application: 30.09.2015
(73) Proprietor: Automotive Energy Supply Corporation, Zama-shi, Kanagawa 252-0012 (JP)
(72) Inventor: Tanjo, Yuji, Zama-shi Kanagawa, 252-0012 (JP); Niida, Yoshihiro, Zama-shi Kanagawa, 252-0012 (JP)
(74) Representative: Herzog, Fiesser & Partner Patentanwälte PartG mbB

(56) References cited:
- EP-A2- 2 555 286
- WO-A1-2013/021955
- US-A1- 2011 117 437
- US-A1- 2011 260 099
- US-A1- 2011 315 918

## Description

### CROSS-REFERENCE TO RELATED APPLICATION

This application claims priority from Japanese Patent Application No. 2014-64923 filed with the Japan Patent Office on March 27, 2014.

### BACKGROUND

### 1. Technical Field

The present disclosure relates to a nonaqueous electrolyte battery and a method for manufacturing the same.

### 2. Related Art

As a nonaqueous electrolyte battery, there has been known a lithium ion secondary battery including a positive electrode active material that contains a spinel-type lithium manganese composite oxide manufactured using manganese sulfate as a raw material and a lithium nickel composite oxide manufactured using lithium hydroxide or the like as a raw material (see, for example, JP-A-2011-76997). A positive electrode active material layer is manufactured by the following method. First, a lithium manganese composite oxide, a lithium nickel composite oxide, and a binder are dispersed in an organic solvent. The obtained composition is kneaded, and thus slurry (hereinafter referred to as positive electrode slurry) is obtained. The obtained slurry is applied on a metal foil and dried, and thus a positive electrode active material layer is manufactured.

It has been known that a raw material component remains in the aforementioned composite compound. For example, it has generally been known that sulfate and/or sulfate ions remains in a lithium manganese composite oxide, and lithium hydroxide and/or lithium carbonate remains in a lithium nickel composite oxide. It has also generally been known that an active material preferably contains as few impurities as possible.

Several patent applications are directed to electrolyte batteries. International Patent Application WO 2013/021955 A1 relates to positive electrode active material for lithium-ion secondary battery, and suggests containing at least one type of metal element selected from a group comprising Al, Y, Ga, In, La, Pr, Nd, Gd, Dy, Fr and Yb. US Patent Application No.: 2011/0260099 A1 relates to a powderous lithium transition metal oxide containing sulfur used as active cathode material in rechargeable lithium batteries. US Patent Application No.: 2011/0117437 A1 discloses a positive electrode for a nonaqueous electrolyte secondary battery which is capable of alleviating generation of gas during charge/discharge with a nonaqueous electrolyte solution penetrated therein, and a method for fabricating the same. In the electrode, lithium salt except for lithium hydroxide and lithium carbonate is present at least on a surface of the particulate positive electrode active material. European Patent Application EP2555286A2 is directed to cathode active material for a secondary battery which is based on different Li-Mn or Li-Fe oxides, the Li-Mn oxides optionally containing lithium carbonate or lithium hydroxide. US Patent Application No.: 2011/0315918 A1 relates to a positive electrode composition for nonaqueous electrolyte secondary battery based on a Li-Ni-Co oxide including Mn and/or Al and optionally further metal cations.

### SUMMARY

The invention is defined by the appended claims 1-4. A nonaqueous electrolyte battery includes a positive electrode active material layer containing a positive electrode active material. The positive electrode active material contains a lithium manganese composite oxide containing sulfate and/or sulfate ions, and a lithium nickel composite oxide containing lithium hydroxide and a second alkaline compound that is not lithium hydroxide, and, per unit mass of the positive electrode active material, the molar equivalent of the sulfate and/or the sulfate ions in the lithium manganese composite oxide is more than the molar equivalent of the lithium hydroxide in the lithium nickel composite oxide and less than the molar equivalent of the second alkaline compound in the lithium nickel composite oxide.

### BRIEF DESCRIPTION OF DRAWINGS

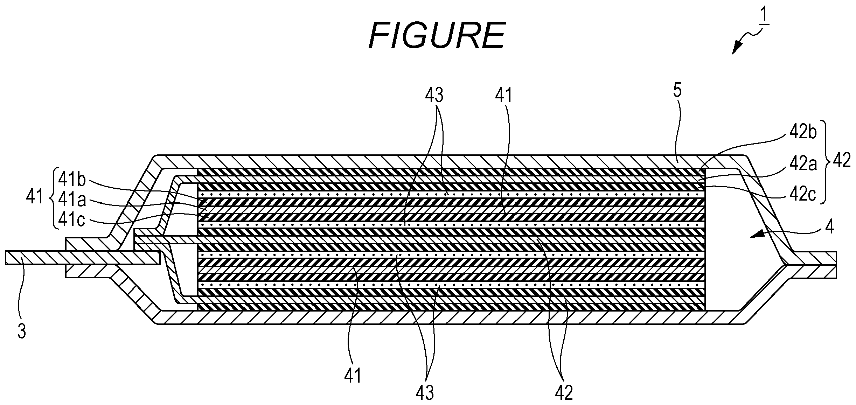

Fig. 1 is a cross-sectional diagram illustrating an aspect of a nonaqueous electrolyte battery according to the present disclosure.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

It has been found out that, in the positive electrode slurry applied on the metal foil, the entry of impurities contained in the lithium nickel composite oxide and impurities contained in the lithium manganese composite compound may cause corrosion of the metal foil under a certain condition. This corrosion is considered to be caused as below. First, an acid component or an alkaline component contained in the positive electrode active material layer is dissolved in the moisture taken in by the moisture absorbing action of the positive electrode active material layer on the metal foil. Then, the generated aqueous solution containing the acid component or the alkaline component permeates to the metal foil side, and thus the metal foil corrodes.

The present disclosure has been made in view of the above-described situation. An object of the present disclosure is to suppress the corrosion of the metal foil on which the positive electrode active material slurry has been applied.

A nonaqueous electrolyte battery according to the present disclosure includes a positive electrode active material layer containing a positive electrode active material. The positive electrode active material contains a lithium manganese composite oxide containing sulfate and/or sulfate ions, and a lithium nickel composite oxide containing lithium hydroxide and a second alkaline compound that is not lithium hydroxide, and, per unit mass of the positive electrode active material, the molar equivalent of the sulfate and/or the sulfate ions in the lithium manganese composite oxide is more than the molar equivalent of the lithium hydroxide in the lithium nickel composite oxide and less than the molar equivalent of the second alkaline compound in the lithium nickel composite oxide.

In the nonaqueous electrolyte battery according to an embodiment of the present disclosure, the gelation of the positive electrode active material slurry and the corrosion of the metal foil are suppressed.

The embodiment of the present disclosure is hereinafter described.

The nonaqueous electrolyte battery according to the embodiment of the present disclosure includes a positive electrode active material layer including a positive electrode active material that contains a spinel-type lithium manganese composite oxide (hereinafter referred to as lithium manganese composite oxide) and a lithium nickel composite oxide.

The lithium manganese composite oxide contains sulfate and/or sulfate ions. The lithium nickel composite oxide contains lithium hydroxide and an alkaline compound (hereinafter, second alkaline compound) that is not lithium hydroxide. The molar equivalent of the sulfate and/or the sulfate ions derived from the lithium manganese composite oxide per unit mass of the positive electrode active material is larger than the molar equivalent of the lithium hydroxide derived from the lithium nickel composite oxide per unit mass of the positive electrode active material. In addition, the molar equivalent of the sulfate and/or the sulfate ions is smaller than the molar equivalent of the lithium carbonate as the second alkaline compound derived from the lithium nickel composite oxide.

In a process of manufacturing the battery according to this embodiment, the generation of gel in a process of stirring the positive electrode slurry can be particularly suppressed. Moreover, in the positive electrode active material layer formed by applying the positive electrode slurry on the metal foil, the corrosion of the metal foil due to the active material layer can be suppressed.

The lithium manganese composite oxide is represented by Liₓ₁Mn_{2-y1}M1_{y1}O_{4+Z1}. On the other hand, the lithium nickel composite oxide is represented by Liₓ₂Ni_{1-y2}M2_{y2}O_{2+Z2}.

The lithium manganese composite oxide and the lithium nickel composite oxide are the components of the positive electrode active material. For the purpose of stabilizing the crystal structure of these composite oxides, for example, part of Mn and Ni of the composite oxides may be replaced by particular elements M1 and M2, respectively.

In the lithium manganese composite oxide (Liₓ₁Mn_{2-y1}M1_{y1}O_{4+Z1}), part of Mn is replaced by one or more kinds of elements M1 selected, to be added as necessary, from the group consisting of Li, Mg, B, Al, V, Cr, Fe, Co, Ni, and W.

The range of yl, which represents the amount of the added element M1 that replaces Mn, may be 0 ≤ y1 ≤ 0.3.

The composition formula of the lithium manganese composite oxide shows that lithium can be deintercalated from the composite oxide or intercalated into the composite oxide so that x1 falls in the range of 0 ≤ x1 ≤ 1. Moreover, the range of z1 may be -0.5 ≤ z1 ≤ 0.5.

In manufacturing the lithium manganese composite oxide, the known starting material disclosed in JP-A-2011-76997 can be used. The starting material may be sulfate of a metal element selected from the group consisting of metal elements of the composite oxide (such as Li, Mn, Mg, Al, Fe, Co, and Ni) so that the sulfate and/or the sulfate ions (hereinafter collectively referred to as SO₄) is contained in the lithium manganese composite oxide.

As the starting material used to add the Mn element, the known raw material disclosed in the above patent document can be used.

An example of a method for preparing the lithium manganese composite oxide is described below. First, the starting materials are weighed so that a predetermined component composition ratio (Liₓ₁Mn_{2-y1}M1_{y1}O_{4+Z1}) is obtained, and the materials are pulverized and mixed using a mortar, a ball mill, or the like. The obtained mixture powder is sintered in air or oxygen atmosphere at a predetermined temperature (for example, 500 to 1200°C), thereby providing lithium manganese composite oxide powder.

In the lithium nickel composite oxide (Liₓ₂Ni_{1-y2}M2_{y2}O_{2+Z2}), similarly to the lithium manganese composite oxide, part of Ni is replaced by one or more kinds of elements M2 selected, to be added as necessary, from the group consisting of Li, Mg, B, Al, Ti, V, Co, and Mn. The range of y2, which represents the amount of the added element M2 that replaces Ni, may be 0 ≤ y2 ≤ 0.7.

The composition formula of the lithium nickel composite oxide shows that lithium can be deintercalated from the composite oxide or intercalated into the composite oxide so that x2 falls in the range of 0 ≤ x2 ≤ 1. Moreover, the range of z2 may be -0.2 ≤ z2 ≤ 0.2.

In manufacturing the lithium nickel composite oxide, the known starting material disclosed in the above patent document can also be used. As the starting material, for example, lithium carbonate can be used so that the second alkaline compound is contained in the lithium nickel composite oxide. In particular, the use of lithium carbonate provides the advantage that the remaining amount of lithium hydroxide in the lithium nickel composite oxide to be obtained can be made relatively small compared to the case of using only lithium hydroxide as the starting material. Moreover, another advantage is that lithium carbonate can be effectively taken in the active material layer. It is considered that lithium carbonate can suppress the corrosion of the metal foil that is caused by the sulfate and/or the sulfate ions contained in the lithium manganese composite compound.

An example of a method for preparing the lithium nickel composite oxide is described below. First, the starting materials are weighed so that a predetermined component composition ratio (Liₓ₂Ni_{1-y2}M2_{y2}O_{2+Z2}) is obtained, and the materials are pulverized and mixed using a mortar, a ball mill, or the like. The obtained mixture powder is sintered in air or oxygen atmosphere at a predetermined temperature (for example, 500 to 1200°C), thereby providing lithium nickel composite oxide powder.

Then, the positive electrode slurry containing the lithium manganese composite oxide and the lithium nickel composite oxide is prepared. First, the lithium manganese composite oxide powder and the lithium nickel composite oxide powder are weighed so that the molar equivalent of the sulfate and/or the sulfate ions contained in the lithium manganese composite oxide per unit mass of the positive electrode active material (for example, per unit mass of the total mass of the lithium manganese composite oxide and the lithium nickel composite oxide) is within a particular range. This particular range refers to the range greater than the molar equivalent of lithium hydroxide contained in the lithium nickel composite oxide and less than the molar equivalent of the second alkaline compound (such as lithium carbonate) contained in the lithium nickel composite oxide. Next, the weighed powder, a conductive agent such as carbon black, a binder such as polyvinylidene fluoride (PVDF), and an organic solvent such as N-methyl-2-pyrrolidone are mixed. By kneading the obtained mixture, the positive electrode slurry for the positive electrode active material to be used for manufacturing the battery according to this embodiment is obtained.

Fig. 1 illustrates a cross-section of a film-covered battery 1, which is an example of the nonaqueous electrolyte battery according to this embodiment. The film-covered battery 1 is a lithium ion secondary battery. The film-covered battery 1 has a flat and rectangular external shape. Moreover, the film-covered battery 1 has a pair of terminals made of a metal plate at one end edge thereof in a longitudinal direction.

In the film-covered battery 1, a power generating element 4 and an electrolyte solution are housed inside an exterior body 5 made of a laminated film. The power generating element 4 includes a plurality of positive electrode plates 41 and negative electrode plates 42 alternately stacked with a separator 43 interposed therebetween. In the example of Fig. 1, three negative electrode plates 42, two positive electrode plates 41, and four separators 43 interposed therebetween are illustrated. In other words, in this example, the negative electrode plates 42 are positioned at the outermost layers of the power generating element 4. Note that the positive electrode plate 41 can alternatively be positioned at the outermost layer of the power generating element 4.

In the positive electrode plate 41, one surface of a rectangular positive electrode current collector 41a is provided with a positive electrode active material layer 41b and the other surface thereof is provided with a positive electrode active material layer 41c. The positive electrode current collector 41a includes, for example, a metal foil such as an aluminum foil and an aluminum alloy foil.

For forming the positive electrode active material layers 41b and 41c, first, the positive electrode active material including the aforementioned lithium manganese composite oxide powder and lithium nickel composite oxide powder, the conductive auxiliary agent such as carbon black, the binder such as polyvinylidene fluoride (PVDF), and the organic solvent such as N-methyl-2-pyrrolidone are kneaded to provide the positive electrode slurry. Next, the positive electrode slurry is applied on a main plane of the positive electrode current collector 41a and dried, and then the slurry is roll-pressed as necessary, whereby the positive electrode active material layers 41b and 41c are formed.

In the negative electrode plate 42, one surface of a rectangular negative electrode current collector 42a is provided with a negative electrode active material layer 42b and the other surface thereof is provided with a negative electrode active material layer 42c. The negative electrode current collector 42a includes, for example, a metal foil such as a nickel foil, a copper foil, a stainless steel foil, or an iron foil. For forming the negative electrode active material layers 42b and 42c, first, the binder is mixed into the negative electrode active material that intercalates and deintercalates lithium ions, such as amorphous carbon, non-graphitizable carbon, graphitizable carbon, or graphite. The obtained mixture is applied on a main plane of the negative electrode current collector 42a and dried, and then the mixture is roll-pressed as necessary, whereby the negative electrode active material layers 42b and 42c are formed.

Part of the end edge of the negative electrode current collector 42a in the longitudinal direction extends as an extension portion that does not have the negative electrode active material layers 42b and 42c. An end of this extension portion is bonded to a negative electrode terminal 3. Similarly, part of the end edge of the positive electrode current collector 41a in the longitudinal direction extends as an extension portion that does not have the positive electrode active material layers 41b and 41c. An end of this extension portion is bonded to a positive electrode terminal, which is not illustrated.

The separator 43 suppresses the short-circuiting between the positive electrode plate 41 and the negative electrode plate 42. The separator 43 also has a function of holding the electrolyte. The separator 43 includes a microporous film including polyolefin such as polyethylene (PE) or polypropylene (PP). Note that the separator 43 is not limited to a single layer film of polyolefin or the like. For example, the separator 43 may be a multilayer body with a three-layer structure obtained by having a polypropylene microporous film sandwiched between polyethylene microporous films, or a multilayer body obtained by stacking a polyolefin microporous film and an organic nonwoven fabric, or the like.

The electrolyte solution used in the nonaqueous electrolyte battery according to this embodiment is not particularly limited. The electrolyte generally used in the lithium ion secondary battery can be used as the electrolyte solution. An example of the electrolyte includes a nonaqueous electrolyte solution obtained by dissolving lithium salt in the organic solvent obtained by mixing ethylene carbonate, propylene carbonate, and a linear carbonate.

### [Examples]

Examples and Comparative Examples of the embodiment of the present disclosure are hereinafter described. The embodiment of the present disclosure is not limited to these examples below, and can be modified in various ways within the scope of the present invention, as defined by the claims.

The positive electrode slurry with various compositions and mixing ratios was prepared by changing the composition of each of the lithium manganese composite oxide (hereinafter, LMO) and the lithium nickel composite oxide (hereinafter, LNO) and the mixing ratio (weight ratio) between LMO and LNO. The obtained positive electrode slurry was used in the examples and comparative examples.

For evaluating the positive electrode slurry used in the examples and comparative examples, whether or not gelation occurred in the positive electrode slurry was checked. Moreover, whether or not corrosion occurred in the metal foil with the positive electrode active material layer formed by the applied positive electrode slurry was checked.

### (Example 1)

For preparing LMO, Li₂CO₃ and MnO₂ (electrolytic manganese dioxide) were used as the starting materials. The starting materials were weighed so that a predetermined LMO composition (LiMn₂O₄) was obtained. Incidentally, the electrolyte manganese dioxide was obtained by electrolyzing a sulfate solution including manganese ions. The electrolyte manganese dioxide contained, as impurities, sulfate and/or sulfate ions (hereinafter referred to as SO₄). Next, these starting materials were pulverized and mixed, and then sintered. Subsequently, the obtained mixture was sieved, whereby coarse particles were removed from the mixture. Thus, LMO (LiMn₂O₄) powder containing 0.05% of SO₄ was obtained.

For preparing LNO, Li₂CO₃ and Ni(OH)₂ were used as the starting materials. Moreover, Co(OH)₃ and MnO₂ were used as the starting materials for supplying the element to be added to the Ni site. These starting materials were weighed so that a predetermined LMO composition (LiNi_{0.33}Co_{0.3}Mn_{0.33}O₂) was obtained. Next, these materials were pulverized and mixed, and then sintered. Subsequently, the obtained mixture was sieved, whereby coarse particles were removed from the mixture. Thus, the powder of LNO (LiNi_{0.33}Co_{0.3}Mn_{0.33}O₂) was obtained. Note that the moisture and atmosphere during each manufacturing step and in storage after the sintering were controlled so that the amount of the impurities (LiOH and Li₂CO₃) mixed in LNO became a predetermined amount (LiOH 0.01%, Li₂CO₃ 0.5%).

For preparing the positive electrode slurry, the LMO powder, the LNO powder, and the conductivity-adding material were dispersed in the organic solvent solution of the binder. The positive electrode slurry obtained by kneading the obtained mixture was used in this example.

Carbon black as the carbon material was used as the conductivity-adding material, polyvinylidene fluoride (PVDF) was used as the binder, and N-methyl-2-pyrrolidone (NMP) was used as the organic solvent. The mixing ratio (weight ratio) between LMO and LNO was LMO:LNO = 2:1.

The content of LMO was 2/3 g and the content of LNO was 1/3 g in 1 g of the positive electrode active material in Example 1. As for the molar equivalent of each component in 1 g of the positive electrode active material, the molar equivalent of SO₄ was 6.9 µEq, the molar equivalent of LiOH was 1.4 µEq, and the molar equivalent of Li₂CO₃ was 45 µEq. In other words, the molar equivalent of the sulfate and/or the sulfate ions contained in LMO is larger than that of lithium hydroxide contained in LNO and is smaller than that of Li₂CO₃, which is the second alkaline compound contained in LNO.

In terms of mass%, the content of SO₄ is 0.033%, the content of LiOH is 0.003%, and the content of Li₂CO₃ is 0.17% in the positive electrode active material. In other words, the order of LiOH < SO₄ < Li₂CO₃ is also satisfied from the viewpoint of mass%. The mass ratio between these components is SO₄/LiOH = 11 and Li₂CO₃/SO₄ = 5.2.

### (Example 2)

The positive electrode slurry was prepared by the same preparing method as that of Example 1 except that LMO (LiMn₂O₄) powder prepared so that the content of SO₄ was 0.1% was used. The content of SO₄ was controlled by using the electrolyte manganese dioxide containing a different amount of SO₄ from that of the electrolyte manganese dioxide used as the raw material of LMO in Example 1. As for the molar equivalent of each component in 1 g of the positive electrode active material, the molar equivalent of SO₄ was 13.8 µEq, the molar equivalent of LiOH was 1.4 µEq, and the molar equivalent of Li₂CO₃ was 45 µEq. The mass ratio between the components per unit mass of the positive electrode active material was SO₄/LiOH = 22 and Li₂CO₃/SO₄ = 2.6.

### (Example 3)

The positive electrode slurry was prepared by the same preparing method as that of Example 1 except that LNO (LiNi_{0.33}Co_{0.3}Mn_{0.33}O₂) powder prepared so that the content of LiOH was 0.01% and the content of Li₂CO₃ was 0.3% was used. The amount of impurities mixed in LMO was controlled by using the same LMO as that of Example 1. The amount of impurities mixed in LNO was controlled by adjusting the condition of controlling the moisture and atmosphere during each manufacturing step or in storage after the sintering. As for the molar equivalent of each component in 1 g of the positive electrode active material, the molar equivalent of SO₄ was 6.9 µEq, the molar equivalent of LiOH was 1.4 µEq, and the molar equivalent of Li₂CO₃ was 27 µEq. The mass ratio between the components per unit mass of the positive electrode active material was SO₄/LiOH = 11 and Li₂CO₃/SO₄ = 3.1.

### (Comparative Example 1)

The positive electrode slurry was prepared by the same preparing method as that of Example 1 except that LMO (LiMn₂O₄) powder prepared so that the content of SO₄ was 1.0% was used. The content of SO₄ was controlled by using the electrolyte manganese dioxide containing a different amount of SO₄ from that of the electrolyte manganese dioxide used as the raw material of LMO in Example 1. As for the molar equivalent of each component in 1 g of the positive electrode active material, the molar equivalent of SO₄ was 138 µEq, the molar equivalent of LiOH was 1.4 µEq, and the molar equivalent of Li₂CO₃ was 45 µEq. The mass ratio between the components per unit mass of the positive electrode active material was SO₄/LiOH = 220 and Li₂CO₃/SO₄ = 0.26.

### (Comparative Example 2)

The positive electrode slurry was prepared by the same preparing method as that of Example 1 except that LNO (LiNi_{0.33}Co_{0.3}Mn_{0.33}O₂) powder prepared so that the content of LiOH was 0.5% and the content of Li₂CO₃ was 0.5% was used. The amount of impurities mixed in LMO was controlled by using the same LMO as that used in Example 1. The amount of impurities mixed in LNO was controlled by adjusting the condition of controlling the moisture and atmosphere during each manufacturing step or in storage after the sintering. As for the molar equivalent of each component in 1 g of the positive electrode active material, the molar equivalent of SO₄ was 6.9 µEq, the molar equivalent of LiOH was 70 µEq, and the molar equivalent of Li₂CO₃ was 45 µEq. The mass ratio between the components per unit mass of the positive electrode active material was SO₄/LiOH = 0.22 and Li₂CO₃/SO₄ = 5.2.

### (Evaluation of performance)

The positive electrode slurry to be evaluated was stirred. Whether or not the gelation occurred in the slurry during the stirring was visually checked.

The positive electrode slurry to be evaluated was applied to have a thickness of 160 µm on each surface of an aluminum foil with a length of 10 m, a width of 300 mm, and a thickness of 20 µm. The slurry was dried and roll-pressed, whereby an electrode roll was manufactured. The manufactured electrode roll was placed for 30 days at a temperature of 40°C and a relative humidity of 60%. After that, whether or not the corrosion occurred in the aluminum foil was visually checked.

Table 1 shows the evaluation results of the positive electrode slurry prepared in Examples 1 to 3 and Comparative Examples 1 and 2. Table 1 shows the content (mass%) of SO₄ in LMO, the content (mass%) of LiOH in LNO, the content (mass%) of Li₂CO₃ in LNO, whether the gelation of the slurry occurred or not, and whether the corrosion occurred in the aluminum foil or not.

**[Table 1]**

| | SO₄/LMO | LiOH/LNO | Li₂CO₃/LNO | Occurrence of Gelation | Occurrence of Corrosion |
|---|---|---|---|---|---|
| Example 1 | 0.05% | 0.01% | 0.5% | No | No |
| Example 2 | 0.1% | 0.01% | 0.5% | No | No |
| Example 3 | 0.05% | 0.01% | 0.3% | No | No |
| Comparative Example 1 | 1.0% | 0.01% | 0.5% | No | Yes |
| Comparative Example 2 | 0.05% | 0.5% | 0.5% | Yes | No |

As obvious from the evaluation results of Table 1, in Comparative Example 1, the gelation of the slurry was not observed in the positive electrode slurry including LMO containing SO₄ whose molar equivalent is more than any of the molar equivalents of LiOH and Li₂CO₃ contained in LNO. However, the corrosion of the metal foil was observed.

In Comparative Example 2, the corrosion of the metal foil was not observed in the positive electrode slurry including LMO containing SO₄ whose molar equivalent is less than any of the molar equivalents of LiOH and Li₂CO₃ contained in LNO. It was confirmed that, however, the gelatin of the slurry was caused.

On the other hand, in the positive electrode slurry prepared in Examples 1 to 3, the molar equivalent of SO₄ in LMO per unit mass of the total mass of LMO and LNO was more than the molar equivalent of LiOH contained in LNO per the same unit mass and was less than the molar equivalent of Li₂CO₃ as the second alkaline compound contained in LNO per the same unit mass. It was confirmed that the gelation was not caused in this positive electrode slurry. Moreover, it was confirmed that the corrosion of the aluminum foil due to the positive electrode active material layer was not caused even after the positive electrode active material layer was formed by the application of the positive electrode slurry on the aluminum foil. Incidentally, the similar effect is expected in the mixture of another LMO where part of Mn has been replaced by another element, which is represented by Liₓ₁Mn_{2-y1}M1_{y1}O_{4+Z1}, and another LNO where part of Ni has been replaced by another element so that the composition of LNO becomes different from the above example, which is represented by Liₓ₂Ni_{1-y2}M2_{y2}O_{2+Z2}, as long as the relation among the molar equivalents of the components satisfies the relation defined in the present disclosure. Moreover, the effect similar to that of the positive electrode slurry prepared in Examples 1 to 3 is expected as long as the mass of the components per unit mass of the positive electrode active material satisfies the relation of LiOH < SO₄ < Li₂CO₃.

As thus described, by the use of the positive electrode slurry according to the present disclosure, the corrosion of the metal foil in the positive electrode for a nonaqueous electrolyte battery can be suppressed. Moreover, the gelation of the slurry can be suppressed. Therefore, the nonaqueous electrolyte battery with the electrode having reliable quality can be provided.

The advantageous effect of the nonaqueous electrolyte battery according to the embodiment of the present disclosure has been described. The description, however, does not limit or narrow the range of the invention described in the scope of claims. For example, in the embodiment and the examples, the laminated-type lithium ion battery has been described as a specific example. However, as modified examples of the nonaqueous electrolyte battery according to the present disclosure, batteries of a cylindrical type, a coin type, a card type, a flat type, an elliptical type, a square type, and a button type can be given.

Moreover, the nonaqueous electrolyte battery according to the present disclosure may be any of the following first to fourth nonaqueous electrolyte batteries.

A first nonaqueous electrolyte battery is a nonaqueous electrolyte battery wherein: a positive electrode active material contains a lithium manganese composite oxide and a lithium nickel composite oxide; the lithium nickel composite oxide contains lithium hydroxide and a second alkaline compound that is not lithium hydroxide; and in the unit mass of the positive electrode active material, the molar equivalent of sulfate or sulfate ions in the lithium manganese composite oxide is more than the molar equivalent of the lithium hydroxide in the lithium nickel composite oxide and less than the molar equivalent of the second alkaline compound.

A second nonaqueous electrolyte battery is the first nonaqueous electrolyte battery wherein the alkaline compound is lithium carbonate.

A third nonaqueous electrolyte battery is a nonaqueous electrolyte battery wherein: a positive electrode active material contains a lithium manganese composite oxide and a lithium nickel composite oxide; the lithium manganese composite oxide contains sulfate or sulfate ions; and the lithium nickel composite oxide uses lithium carbonate as a starting material.

A fourth nonaqueous electrolyte battery is the third nonaqueous electrolyte battery wherein: in the unit mass of the positive electrode active material, the molar equivalent of sulfate or sulfate ions in the lithium manganese composite oxide is more than the molar equivalent of the lithium hydroxide in the lithium nickel composite oxide and less than the molar equivalent of the second alkaline compound.

A method for manufacturing a nonaqueous electrolyte battery according to the present disclosure may be any of the following first to third methods for manufacturing a nonaqueous electrolyte battery.

A first method for manufacturing a nonaqueous electrolyte battery is a method for manufacturing a nonaqueous electrolyte battery in which a positive electrode is formed by applying, on a metal foil, positive electrode slurry formed by dissolving a positive electrode active material and a binder in an organic solvent and kneading the mixture, wherein: the positive electrode active material contains a lithium manganese composite oxide and a lithium nickel composite oxide; the lithium nickel composite oxide contains lithium hydroxide and a second alkaline compound that is not lithium hydroxide; and in the unit mass of the positive electrode active material, the molar equivalent of sulfate or sulfate ions in the lithium manganese composite oxide is more than the molar equivalent of the lithium hydroxide in the lithium nickel composite oxide and less than the molar equivalent of the second alkaline compound.

A second method for manufacturing a nonaqueous electrolyte battery is a method for manufacturing a nonaqueous electrolyte battery in which a positive electrode is formed by applying, on a metal foil, positive electrode slurry formed by dissolving a positive electrode active material and a binder in an organic solvent and kneading the mixture, wherein: the positive electrode active material contains a lithium manganese composite oxide and a lithium nickel composite oxide; the lithium manganese composite oxide contains sulfate or sulfate ions; and the lithium nickel composite oxide uses lithium carbonate as a starting material.

A third method for manufacturing a nonaqueous electrolyte battery is the second method for manufacturing a nonaqueous electrolyte battery wherein in the unit mass of the positive electrode active material, the molar equivalent of the sulfate or the sulfate ions in the lithium manganese composite oxide is more than the molar equivalent of the lithium hydroxide in the lithium nickel composite oxide and less than the molar equivalent of the second alkaline compound.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A nonaqueous electrolyte battery comprising a positive electrode active material layer containing a positive electrode active material, wherein
the positive electrode active material contains a lithium manganese composite oxide containing sulfate and/or sulfate ions, and a lithium nickel composite oxide containing lithium hydroxide and a second alkaline compound that is not lithium hydroxide, **characterized in that**
per unit mass of the positive electrode active material, the molar equivalent of the sulfate and/or the sulfate ions in the lithium manganese composite oxide is more than the molar equivalent of the lithium hydroxide in the lithium nickel composite oxide and less than the molar equivalent of the second alkaline compound in the lithium nickel composite oxide.

2. The nonaqueous electrolyte battery according to claim 1, wherein the second alkaline compound is lithium carbonate.

3. A method for manufacturing a nonaqueous electrolyte battery, comprising:
mixing a positive electrode active material, a binder, and an organic solvent;
providing positive electrode slurry by kneading the obtained mixture; and
manufacturing a positive electrode by applying the positive electrode slurry on a metal foil, wherein
the positive electrode active material contains a lithium manganese composite oxide containing sulfate and/or sulfate ions, and a lithium nickel composite oxide containing lithium hydroxide and a second alkaline compound that is not lithium hydroxide, **characterized in that**
per unit mass of the positive electrode active material, the molar equivalent of the sulfate and/or the sulfate ions in the lithium manganese composite oxide is more than the molar equivalent of the lithium hydroxide in the lithium nickel composite oxide and less than the molar equivalent of the second alkaline compound in the lithium nickel composite oxide.

4. The method according to claim 3, wherein the second alkaline compound is lithium carbonate.

## Patentansprüche

1. Batterie mit nichtwässrigem Elektrolyt, umfassend eine positiv aktive Elektrodenmaterialschicht, die ein positiv aktives Elektrodenmaterial enthält, wobei
das positiv aktive Elektrodenmaterial ein Lithiummanganverbundoxid, das Sulfat und/oder Sufationen enthält, und ein Lithiumnickelverbundoxid enthält, das Lithiumhydroxid und eine zweite alkalische Verbindung enthält, die nicht Lithiumhydroxid ist, **dadurch gekennzeichnet, dass**
das Moläquivalent des Sulfats und/oder der Sufationen in dem Lithiummanganverbundoxid pro Masseneinheit des positiv aktiven Elektrodenmaterials mehr als das Moläquivalent des Lithiumhydroxids in dem Lithiumnickelverbundoxid und weniger als das Moläquivalent der zweiten alkalischen Verbindung in dem Lithiumnickelverbundoxid ist.

2. Batterie mit nichtwässrigem Elektrolyt nach Anspruch 1, wobei die zweite alkalische Verbindung Lithiumcarbonat ist.

3. Verfahren zum Fertigen einer Batterie mit nichtwässrigem Elektrolyt, umfassend:
Mischen eines positiv aktiven Elektrodenmaterials, eines Bindemittels und eines organischen Lösungsmittels;
Bereitstellen von positiver Elektrodenaufschlämmung durch Kneten der erhaltenen Mischung; und
Fertigen einer positiven Elektrode durch Aufbringen der positiven Elektrodenaufschlämmung auf eine Metallfolie, wobei
das positiv aktive Elektrodenmaterial ein Lithiummanganverbundoxid, das Sulfat und/oder Sufationen enthält, und ein Lithiumnickelverbundoxid enthält, das Lithiumhydroxid und eine zweite alkalische Verbindung enthält, die nicht Lithiumhydroxid ist, **dadurch gekennzeichnet, dass**
das Moläquivalent des Sulfats und/oder der Sufationen in dem Lithiummanganverbundoxid pro Masseneinheit des positiv aktiven Elektrodenmaterials mehr als das Moläquivalent des Lithiumhydroxids in dem Lithiumnickelverbundoxid und weniger als das Moläquivalent der zweiten alkalischen Verbindung in dem Lithiumnickelverbundoxid ist.

4. Verfahren nach Anspruch 3, wobei die zweite alkalische Verbindung Lithiumcarbonat ist.

## Revendications

1. Batterie à électrolyte non aqueux comprenant une couche de matériau actif d'électrode positive contenant un matériau actif d'électrode positive, dans laquelle
le matériau actif d'électrode positive contient un oxyde composite de lithium-manganèse contenant du sulfate et/ou des ions sulfate, et un oxyde composite de lithium-nickel contenant de l'hydroxyde de lithium et un deuxième composé alcalin qui n'est pas l'hydroxyde de lithium, **caractérisé en ce que** par unité de masse du matériau actif d'électrode positive, l'équivalent molaire du sulfate et/ou des ions sulfate dans l'oxyde composite de lithium-manganèse est supérieur à l'équivalent molaire de l'hydroxyde de lithium dans l'oxyde composite de lithium-nickel et inférieur à l'équivalent molaire du deuxième composé alcalin dans l'oxyde composite de lithium-nickel.

2. Batterie à électrolyte non aqueux selon la revendication 1, dans laquelle le deuxième composé alcalin est le carbonate de lithium.

3. Procédé de fabrication d'une batterie à électrolyte non aqueux, comprenant : le mélange d'un matériau actif d'électrode positive, un liant et un solvant organique ; la fourniture d'une suspension concentrée d'électrode positive par malaxage du mélange obtenu ; et la fabrication d'une électrode positive par application de la suspension concentrée d'électrode positive sur une feuille métallique, dans lequel le matériau actif d'électrode positive contient un oxyde composite de lithium-manganèse contenant du sulfate et/ou des ions sulfate, et un oxyde composite de lithium-nickel contenant de l'hydroxyde de lithium et un deuxième composé alcalin qui n'est pas l'hydroxyde de lithium, **caractérisé en ce que** par unité de masse du matériau actif d'électrode positive, l'équivalent molaire du sulfate et/ou des ions sulfate dans l'oxyde composite de lithium-manganèse est supérieur à l'équivalent molaire de l'hydroxyde de lithium dans l'oxyde composite de lithium-nickel et inférieur à l'équivalent molaire du deuxième composé alcalin dans l'oxyde composite de lithium-nickel.

4. Procédé selon la revendication 3, dans lequel le deuxième composé alcalin est le carbonate de lithium.
